# EUROPEAN PATENT APPLICATION

(11) **EP 1 498 899 A1**
(43) Date of publication of application: **19.01.2005**
(21) Application number: 03723128.9
(22) Date of filing: 16.04.2003
(51) Int. Cl.: G11B 27/00, G11B 20/10, H04N 5/91, G06F 9/06

(54) **RECORDING MEDIUM AND PROGRAM**

(30) Priority: 24.04.2002 JP 2002122514
(71) Applicant: KONICA CORPORATION, Tokyo 163-0512 (JP)
(72) Inventor: Ueda, Yutaka c/o Konica Photo Imaging Corporation, Hino-shi, Tokyo 191-8511 (JP)
(74) Representative: Garkisch, Marcus
(86) International application number: PCT/JP2003/004827
(87) International publication number: WO 2003/092006

(57) **Abstract**

During information recording operations, the CPU records in the information recording medium the information outputting program and the automatic copying program, and the image information obtained from the negative film received from the customer. When the information recording medium is inserted in the computer terminal of the customer, the automatic copying program is started automatically, and not only the information outputting program is copied onto the hard disk of the computer terminal, but also a directory is prepared corresponding to the identification information recorded within the information recording media, and the image information is saved in this directory.

## Description

### TECHNICAL FIELD

The present invention relates to recording media and program that realize slide shows using image information and music song audio information.

### BACKGROUND

In recent years, there are an increasing number of customers who are handling the photographs taken using cameras as digital image information. For example, the image information stored in data recording media in digital cameras is read in by a computer terminal such as a PC, and it becomes possible to view the photographs easily by playing back the data read in by the PC using an image display software.

Further, even the service of converting photographs taken using film cameras into digital image information is also being provided. For example, if an exposed negative film is taken to an order accepting shop such as either a photo service shop with lab facilities or a convenience store, in the photo service shop, after the exposed negative is developed, it is read as digital data by a scanner, etc., and the read image data is written in and delivered to the customer in an information recording media such as a CD-R.

Subsequently, the customer receiving the data recording medium such as CD-R's in which the image data has been written, can view easily the photos in the negative film from which the image data has been read out by playing back the image data in a computer terminal such as a PC at home, and even a customer who does not own a digital camera can handle the photos as digital image information.

However, the above conventional data conversion service is one in which the image data of photographs recorded on the negative film is read out and stored in the data recording medium, and the customer receiving the data recording medium will have to manually copy the image information recorded in the information recording medium onto the hard disk, etc., of the computer, and will have to manage the image data by assigning a file name to each image, and hence the work was very tedious. In particular, when handling the image data recorded in several data recording media such as CD-R's, the labor and time required is too much and the task is very complicated since the customer has to copy a large volume of image data and assign names to each image.

In addition, in recent years, even music song audio data has come to be handled as digital data, the function of reproducing music song audio data has been added to PCs so that PC users can enjoy music, and also software that reproduces music song audio information as the background music (BGM) for slide shows are also being provided. In such cases, after carrying out the complicated and tedious work of copying image information as described above, it is necessary to carry out the similarly tedious tasks of copying the music song audio information and then establish the correspondence between the image information and the music song audio information, which takes a lot of labor and hence it is not possible to use slide shows easily.

### SUMMARY

The purpose of the present invention is to eliminate the tediousness of the copying work by automatically copying into the computer the image information read in from negative films, thereby making it possible to enjoy slide shows.

In order to achieve the above objective, the present invention is equipped with the following features.

The first preferred embodiment of the present invention has the feature that it has in its storage the image information, an information output program that outputs the image based on said image information in the computer, and an automatic copying program that automatically stores said image information and the information copied by said information output program in a specific location within the computer.

The first preferred embodiment of the present invention has the feature that it has the function of automatically storing said image information and the information copied by said information output program that outputs the image based on said image information in the computer in specific locations within the computer.

According to the first preferred embodiment of the present invention, the image information read out from the photograph recorded in a negative film can be copied automatically into the computer. Because of this, the tediousness of complicated copying operations is eliminated, and it becomes possible, for example, to enjoy slide shows with ease.

The recording media according to the present invention has the feature that said automatic copying program automatically stores, in said computer, part of said image information and said information output program at said specific locations within the computer.

According to the first preferred embodiment of the present invention, it is possible to suppress the memory area used in the computer because a part of the image information stored in the recording medium is stored automatically at specific locations within the computer, and since the image information that cannot be stored automatically can be read out from the recording medium and stored in the computer whenever it becomes necessary.

The present invention has the feature that said specific locations can be any recording medium such as that of an internal hard disk of said computer, or an internal hard disk of other computers to which said computer can access via a network, or a storage apparatus that can be connected to said other computers.

According to the first preferred embodiment of the present invention, it is possible to store automatically the image information or information output program in not only any computer but also in any other computer or storage apparatus that can be connected to said computer.

The present invention is one in which music song audio information is also recorded, and said information output program clearly displays the storage location of said music song audio information in a selectable manner, and outputs, in said computer, image selected based on said image information and the music song audio based on the selected one of said music song audio information at the same time.

Said automatic copying program has the feature that it automatically stores in specific locations of said computer said image information and the selected ones of said music song audio information along with the copy information of said information output program.

According to the first preferred embodiment of the present invention, it is possible to enjoy slide shows easily because it is possible to output in the computer simultaneously the image and the music song audio based on the image information and music song audio information.

The present invention has the feature that the unique identifier information is also recorded, and said automatic copying program not only stores automatically in said computer at said specific locations the copy information of said information output program, but also reserves data storage area corresponding to said identifier information at said specific locations, and stores automatically the copy information of said image information in said reserved data storage area.

According to the first preferred embodiment of the present invention, by storing the image information and the music song audio information in an identifiable manner inside the computer it is possible to manage them comprehensively. Because of this, it is possible to enjoy slide shows easily because the tasks of selecting or searching for the image information or music song audio information inside the computer have become very simplified.

The present invention has the feature that said image information can include plural processed image information having different resolutions.

According to the first preferred embodiment of the present invention, since plural image information with different resolutions are generated by processing a single image information and these plural image information with different resolutions are stored within the computer, in the computer, it is possible to select and use either the image information or the processed image information depending on the application. In addition, for example, when the resolution of the original image information is high, it is possible to output the image information in the computer after processing it to suit the resolution of the computer display thereby saving the amount of memory used.

### BRIEF DESCRIPTION OF DRAWINGS

Fig. 1 is a diagram showing the overall configuration of the image and audio recording system.
Fig. 2 is a block diagram showing the functional configuration of the information recording terminal 40.
Fig. 3 is a flow chart showing the procedure of the method of image and audio information recording in the image and audio information recording system.
Fig. 4 is a diagram showing an example of the configuration of the screen (list of images display screen) that is displayed on the computer terminal 2a.
Fig. 5 is a diagram showing an example of the configuration of the screen (slide show editing screen) that is displayed on the computer terminal 2a.
Fig. 6 is a flow chart showing the processing for the automatic copying of information by the automatic copying program.
Fig. 7 is a diagram showing the organization of data recorded in the information recording medium 5.
Fig. 8 is a diagram showing an example of the organization of data stored inside the computer 2a by the execution of the automatic copying program.
Fig. 9 is a flow chart showing the information recording processing by CPU41 in Fig. 2.

### THE PREFERRED EMBODIMENT OF THE INVENTION

The details of the preferred embodiments of the present invention are described here while referring to the figures. However, the image information in the following preferred embodiments includes original image data, thumbnail data, and screen data, and the thumbnail data and screen data correspond to the processed image information mentioned in the above claims.

To begin with, the configuration is described below.

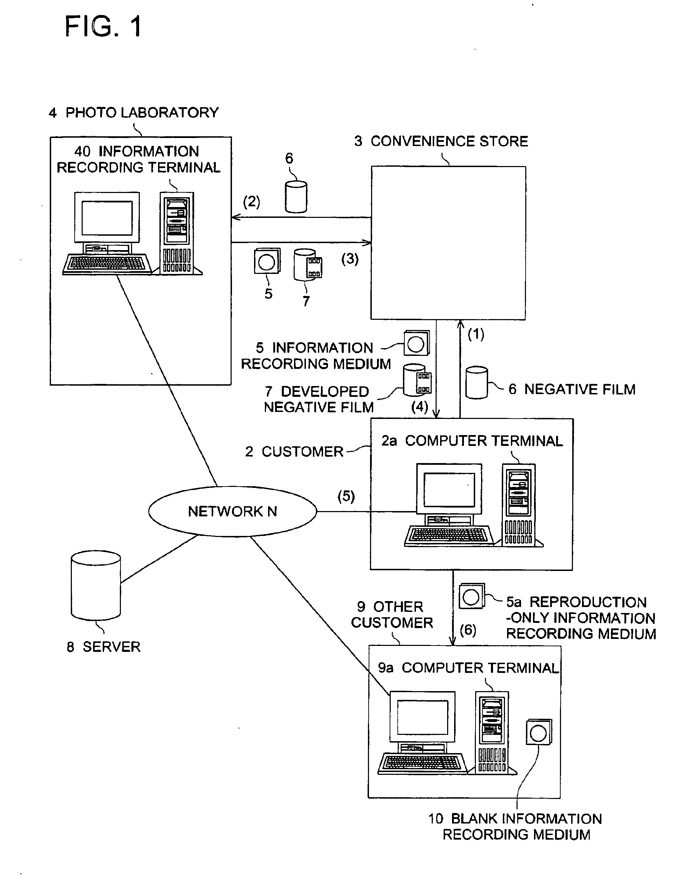

Fig. 1 is a diagram showing the overall configuration of the image and audio recording system. As is shown in Fig. 1, the image and audio recording system according to the present preferred embodiment of the invention comprises the customer 2 who provides the negative film 6, the photo laboratory 4 that reads the image data from the undeveloped negative film, and prepares the information recording medium 5 in which the image data and the dedicated application program have been recorded, and the order processing shops such as convenience stores 3 that interface between the customers 2 and the photo laboratories 4, the server 8, and other customers 9.

Further, in Fig. 1, although an example has been shown in which only one each of customer 2, convenience store 3, photo laboratory 4, server 8, and other customer 9 have been shown to be connected, there is no restriction on the numbers of each of these. In addition, in the present preferred embodiment, the computer terminal 2a, computer terminal 9a, and the information recording terminal 40 are connected to the server 8 via the network N, and can download various types of information such as music song audio information or image information, etc., and although the configuration which permits the transmission and reception of data mutually between the computer terminal 2a and the computer terminal 9a, this function is not an absolutely mandatory function, and it is quite permissible even if the different terminals are not connected to the network N.

Customer 2 takes the negative film 6 to the convenience store 3, and receives the information recording medium 5 and the developed negative film 7 from the convenience store 3. The customer 2 possesses a computer terminal 2a that can execute the dedicated application software recorded in the information recording medium 5, and this computer terminal 2a is connected via the network N to the server 8 that distributes the music song audio information, and the customer 9a is given the reproduction-only information recording medium 5a that is prepared newly in the computer terminal 2a. Further, the computer terminal 2a is connected to the computer terminal 9a of other customer 9 via the network N. The computer terminal 2a is equipped with a control section that controls the various sections of the terminal, a storage section that stores information, and also a communication control section for connecting to the network N, a display apparatus that outputs the image, and speakers that output the music audio signals (all of these are not shown in the figure).

When the convenience store 3 receives the negative film 6 from the customer 2, it sends that negative film 6 to the photo laboratory 4. Further, it receives from the photo laboratory 4 the information recording medium 5 and the developed negative film 7 and delivers them to the customer 2.

The photo laboratory 4 is equipped with an information recording terminal 40, and this information recording terminal 40 develops the negative film 6 received from the customer 2 via the convenience store 3 and prepares the developed negative film 7, and records the image information that can be obtained from the developed negative film 7, the music song audio information, and the dedicated application software program in the information recording medium 5. Next, the information recording medium 5 and the developed negative film 7 are supplied to the customer 2 via the convenience store 3. In addition, the information recording terminal 40 is connected to the server 8 via the network N.

The server 8 is connected via the network N to the computer terminal 2a, the information recording terminal 40, and the computer terminal 9a, and distributes the music song audio information.

The customer 9 possesses a computer terminal 9a that can record information in an information recording medium, and this computer terminal 9a is connected not only to the music song information distributing server 8 but also to the computer terminal 2a of the customer 2 via the network N. The computer terminal 9a is equipped with a control section that controls the various sections of the terminal, a storage section that stores information, and also a communication control section for connecting to the network N, a display apparatus that outputs the image, and speakers that output the music song audio signals (all of these are not shown in the figure).

The network N is a communication network configured using dedicated communication lines or existing public switched telephone line circuits, and it is possible to apply several forms such as LANs, WANs, etc., to this network. The network N, for example, includes various types of communication networks such as telephone line networks, ISDN line networks, dedicated lines, mobile communication networks, communication satellite circuits, CATV line networks, and internet service providers connecting these networks. In addition, although an example of the connections among the different equipment and terminals being wire lines has been shown in Fig. 1, these connections can also be wireless communication links. However, from the point of view of reliability of information management, it is desirable that the network is one in which security measures have been taken to ensure that only specific users can access the network.

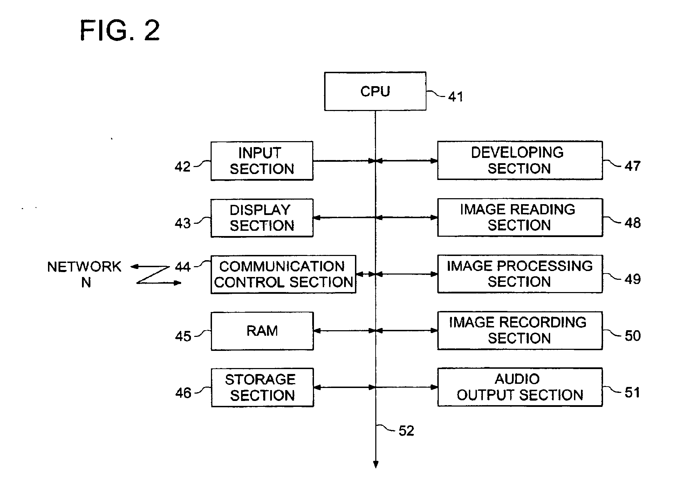

Here, the configuration of the information recording terminal 40 shown in Fig. 1 is described in the following. Fig. 2 is a diagram showing the functional configuration of the information recording terminal 40. As is shown in Fig. 2, the information recording terminal 40 comprises the CPU 41, the input section 42, the display section 43, the communication control section 44, the RAM 45, the storage section 46, the developing section 47, the image reading out section 48, the image processing section 49, the image recording section 50, and the audio output section 51, and all these different sections are interconnected via the bus 52 so that transmission and reception of data is possible among them.

The CPU (Central Processing Unit) 41 reads out the system programs or various types of control programs stored in the storage section 46 and expands them in the RAM 45, and carries out central control of the operations of the different sections in accordance with said control programs. Further, the CPU 11 executes the different processing following the control programs that have been expanded in the RAM 45, and not only stores the results of these executions in the RAM 45 but also displays them in the display section 43. Subsequently, the results of processing stored in the RAM 45 are saved in the specific saving locations of the storage section 46. In concrete terms, the CPU 41 reads out the information recording processing program from the storage section 46 and executes the information recording processing that is described later in this document.

During the information recording processing, the CPU 41 records in the information recording medium 5 the image information obtained based on the negative film 6 received from the customer 2 via the convenience store 3, the automatic copying program and the information output program that are stored in the storage section 46, and the identification information (Disc ID) that is unique for that particular information recording medium. In addition, it is also permissible to store in the information recording medium 5 the music song audio information obtained from the server 8 via the network N, and the music song audio information stored in the storage section 46.

The input section 42 contains a keyboard equipped with cursor control keys, numeric keys, and various function keys, and the key depression signal corresponding to the key in this keyboard that was depressed is output to the CPU 41. Further, the input section 42 can also have pointing devices such as a mouse, a touch panel, or other input devices.

The display section 43 is configured using an LCD display (Liquid Crystal Display) or a CRT (Cathode Ray Tube) display device, and in accordance with the instruction of the display signal from the CPU 41, this section displays various types of information such as the image information input from the communication control unit 44, the image information read out from the developed negative film 7 by the image reading out section 48, the processed image generated from the image information by the image processing section 49, etc.

The communication control section 44 is an interface that can be connected to a transmission medium that is connected to a network such as a LAN or WAN, or the internet, and is configured using modems or terminal adapters. The communication control section 14 carries out the controls necessary for carrying out communication via communication lines such as telephone lines, ISDN lines, wireless communication links, dedicated lines, CATV line networks, etc., with external equipment such as film output equipment, display equipment, medical diagnosis equipment, filing equipment, host server, etc. In addition, when the communication control section 44 receives the image information or the music song audio information from the server 8 via the network N, it outputs the data to the different sections of the information recording terminal 40 in accordance with the instructions input from the CPU 41.

The RAM (Random Access Memory) 45 constitutes the work area for temporarily storing the different programs executed by the CPU 41 and the data processed by the different programs.

The storage section 46, comprises a storage medium (not shown in the figure) in which program and data have been stored beforehand, and this storage medium is configured using magnetic or optical recording media, or using semiconductor memories. This recording media is provided in the storage section 46 either in a permanent manner or in a removable manner. The system programs, various processing programs corresponding to the present system, and the data processed by the different programs are stored in said recording medium. Further, the programs are stored in the form of program code that the computer can read out, and the CPU 41 executes its operations according to said program code.

In specific terms, the storage section 46, stores the dedicated application programs (the information output program and the automatic copying program), and the information recording processing program used by the CPU 41 during the information recording operations. In addition, the storage section 46 also stores the image information and the music song audio information from the server 8 that are input from the communication control section 44 via the network N, the image information read out by the image reading out section 48, and the identification information issued by the control section 41.

The information output program is a program for outputting simultaneously the image based on the image information and the music song audio output based on the music song audio information. The information output program includes, apart from the slide show program for reproducing in the computer terminal 2a the image information and the music song audio information while establishing the relationship between the two, the music song acquisition program that makes it possible to acquire the music song audio information that is played during the slide show, and the consolidated sweep storing program that either stores in a storage section such as a hard disk or stores in other information recording media and transmits it as an attachment to an email entire sets of the image information, music song audio information, slide show program, and a file giving the relationships among them. These programs may be executed individually or may be executed as a set along with the electronic album program. In addition, the automatic copying program is one that automatically stores in a specific location of the computer terminal 2a the image information, the music song audio information, and the information output program.

The developing section 47 prepares the exposed negative film 7 by developing the negative film 6, and the image reading out section 48 reads out the exposed negative film 7 and converts it into digital data (image information). The resolution of read out by the image reading out section 48 at this time is taken as the basic resolution. Further, here, the resolution is the number of pixels that is commonly used in digital cameras, etc., and is explained in the following.

The image processing section 49, carries out, according to the instructions from the CPU 41, various types of image data processing such as the frequency processing of adjusting the sharpness of the image, the gradation processing of converting the image to the appropriate contrast, the dynamic range compression processing of putting the image within an easy to view image density range without decreasing the contrast of the detailed part of the subject in the case of an image with a wide dynamic range, and the compression processing of compressing the image data using a specific compression method, etc., on the image data input from the image reading out section 48.

Further, the image processing section 49 carries out the reduction processing of the image information having the basic resolution mentioned above (hereinafter referred to as the original image), and generates a processed image information having a lower resolution than the original image. For example, based on the image information of an original image data having a resolution of 2048×1536 pixels, an image information with a medium resolution of 1024x768 pixels is generated to suit the display device characteristics (hereinafter referred to as screen data), or an image information with a low resolution of 160x120 pixels (hereinafter referred to as thumbnail data) suitable for list display is generated by the image processing section 49.

The information recording medium 5 is installed in the image recording section 50 in a removable manner. The image recording section 50 writes into the information recording medium 5 the image information input from the image reading out section 48 and the image processing section 49, and the dedicated application program read out from the storage section 46.

Although any medium such as a CD-R, DVD-R, or MO that can be read out by the computer terminal 2a can be used as the information recording medium 5 into which information is written by the image recording section 50, a CD-R is very suitable considering that it is inexpensive and can be read out by most computer terminals. Further, in the present preferred embodiment of the invention, although the example of the image recording section 50 writing into a blank information recording medium 5 the image information, the processed image information, the information output program, and the automatic copying program, it is also possible to record, apart from these, the music song audio information, and also, it is possible to use an information recording medium in which the default music song audio information or image information have been recorded beforehand.

The audio output section 51 is a speaker that reproduces the music song audio based on the music song audio information. The audio output section 51 outputs the selected music song audio in accordance with the instructions issued by the control section 41.

Further, it is permissible for each of the above functional parts constituting the information recording terminal 40 to be configured as separate equipment, or they can be configured as combinations of several constituent parts, for example, the CPU 41, the image reading out section 48, the image processing section 49, and the image recording section 50 can be configured integrally, or the CPU 41, the developing section 47, and the image reading out section 48, etc., can be configured integrally. Further, in the photo laboratory 4, it is possible to install a printer that can be connected to the information recording terminal 40, and using this printer, it is possible to output the image information that has been read out by the image reading out section 48. Any type of printer can be used, such as ink jet type printers, electro-photographic type printers, silver halide type printers, etc.

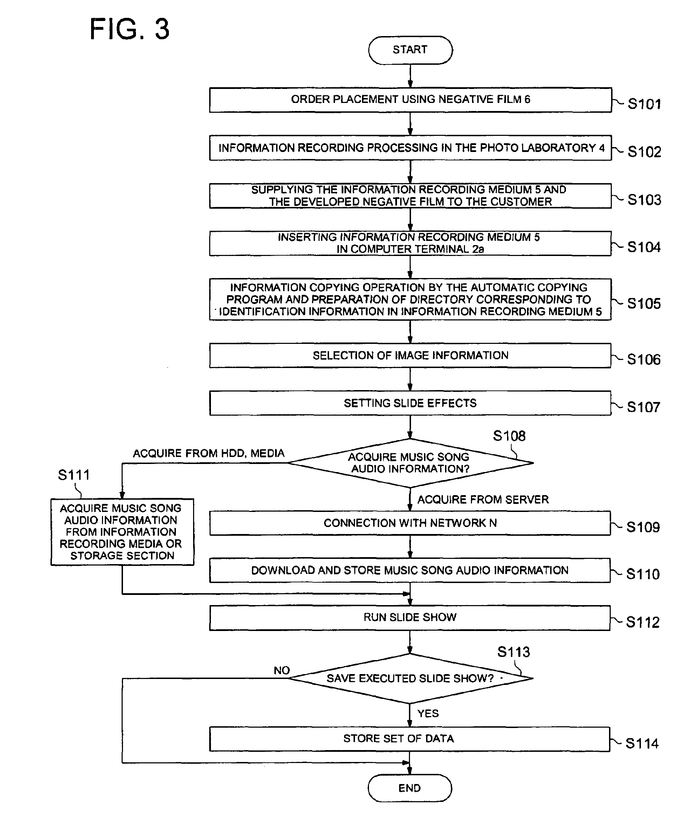

In the following, the procedure in the image and audio information recording system with the above configuration from after the customer 2 brings the negative film 6 to the convenience store 3, the information recording medium 5 in which the image information and the dedicated application program have been written is obtained, the music song audio information is acquired, until the data and program necessary for a slide show are output as a complete set is described while referring to the flow chart in Fig. 3.

Furthermore, although the following explanation has taken the example of placing an order for the information recording medium 5 in a convenience store 3, the shop accepting the order need not be limited to a convenience store 3 and the shop can be any store where the customer 2 places order for developing and printing the film. In addition, it is also possible for the customer 2 to place the order for the information recording medium 5 directly with a photo laboratory 4 without the intervention of any order accepting shop such as a convenience store 3, etc. Furthermore, although the explanations given below are mainly when the customer 2 supplies the image information in the form of a negative film 6, the customer 2 can also supply a developed negative film or a positive film (which can be either developed or undeveloped), or else, the customer 2 can supply the image information taken using a digital camera and recorded in a memory card such as a compact flash (registered trade mark) card, a smart media, a memory stick (registered trade mark), a multimedia card, or an SD memory card, etc., or recorded in a CD-R or other information recording media. Also, when the customer 2 provides an information recording medium, the CPU 41 of the information recording terminal 40 reads out the image information from this information recording medium supplied by the customer 2 and processes it during the information recording processing to be described later in this document.

As is shown in Fig. 3, in an image and audio information recording system, the customer 2 brings ((1) in Fig. 1) a negative film 6 on which photographs have been taken using a film camera to a shop such as a convenience store 3, etc., the convenience store 3 sends the negative film 6 to the photo laboratory 4 ((2) in Fig. 1) (step S101). The photographic images recorded in this negative film 6 can be either those taken by the customer himself or herself or those taken by any other person or customer.

Next, at the photo laboratory 4, using the information recording terminal 40, the negative film 6 is developed thereby preparing the developed negative film 7, the image information is read out from the developed negative film (the development process is skipped if the negative film 6 has already been developed), the read out image information is processed, two types of image information (thumbnail data and screen data) with lower resolution than this image information are prepared from this image information, and then the three types of image information and the dedicated application program are written into the information recording medium 5 (step S102).

Here, the sequence of writing into the information recording medium 5 can be selected arbitrarily, with either the image information or the dedicated application program being written in first, and when the image information is obtained in the photo laboratory by scanning the negative film, it is preferable from the point of view of productivity to start writing first the dedicated application program without waiting for the scanning process to be completed. In addition, it is also possible to record in the information recording medium 5 the music song audio information depending on the necessity.

Thereafter, the photo laboratory 4 sends the information recording medium 5 in which the image information and the dedicated application program have been written and the developed negative film 7 to the convenience store ((3) in Fig. 1), and these are handed over to the customer 2 from the convenience store 3 ((4) in Fig. 1) (step S103).

Next, when the customer 2 who has obtained the information recording medium 5 from the convenience store 3 inserts that information recording medium 5 in the computer terminal 2a possessed by the customer 2 (step S104), the automatic copying program stored in the information recording medium 5 gets started automatically, and not only the dedicated application program gets copied into the computer terminal 2a but also a directory corresponding to the identification information of the information recording medium 5 is prepared automatically in the computer terminal 2a and the image information is copied into that directory automatically (step S105). In addition, the destination of automatic copying of the information in the information recording medium 5 is not limited to computer terminal 2a. For example, this copying destination can also be the computer terminal 9a that is connected to the computer terminal 2a via the network N, or can be a blank information recording medium 10 inserted in the computer terminal 9a.

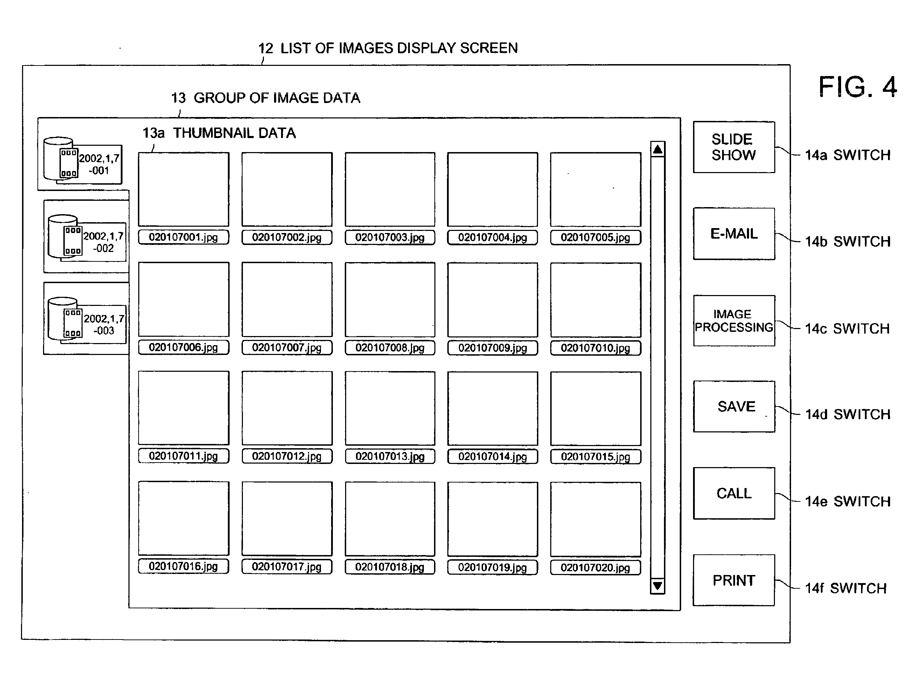

Subsequently, when the information outputting program stored in the computer terminal 2a is executed, a list of images display screen 12 shown in Fig. 4 is displayed in the computer terminal 2a. This list of images display screen displays, for example, plural image data sets 13, which are collections of thumbnail data 13a, and the switches 14a to 14f clearly indicating the processes carried out for the selected image data set 13 or thumbnail data 13a, etc., are also displayed. Thereafter, when the customer 2 selects from the displayed image data sets 13 the image data set 13 the processing which is desired by the customer, an album containing a series of thumbnail data 13a constituting the selected image data set 13 will be displayed.

Next, when the customer 2 selects the switches 14a to 14f thereby selecting the processes of slide show, email, image editing, save, call, or print, etc., corresponding to each of these switches, a screen (not shown in the figure) corresponding to each process is displayed thereby making it possible to execute these processes. For example, when "E-mail" is selected by pressing the switch 14b, an input screen is displayed in which the user is prompted to specify the size of the image information to be attached to the email and also enter the details and text of the email itself whereupon the user can send the e-mail with the selected image information attached to it to the desired e-mail destination address. In a similar manner, the brightness adjustment and color adjustment can be made if "image editing" is selected by pressing the switch 14c, and the specified image information can be saved in the specified directory if "save" is selected by pressing the switch 14d. Further, it is possible to call a previously saved image information by pressing the switch 14e for the "call" function, and the specified image information can be printed out in the specified printer by pressing the switch 14f for the "print" function. Further, these processing are examples of the processing carried out by the computer according to the information outputting program.

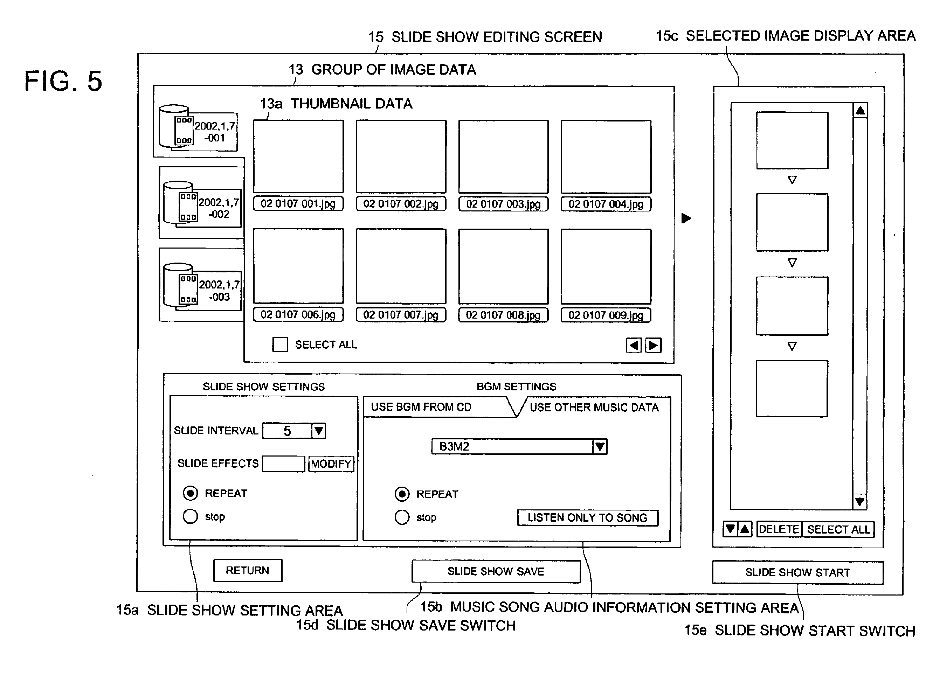

Furthermore, when "slide show" is selected by pressing the switch 14a, the slide show editing screen 15 shown in Fig. 5 is displayed in the computer terminal 2a. In this slide show editing screen 15, in addition to the thumbnail data 13a of the selected image data set 13, the slide show setting area 15a for setting the interval between slides and effects for the slides during the slide show and the music song audio information setting area 15b for setting the music song information to be played during the slide show, and the selected image display area 15c displaying the thumbnail data 13a of the images reproduced during the slide show, the slide show save switch 15d for saving the image information, the music song audio information, the information outputting program, and the relationships file all together in one set, and the slide show start switch 15e for starting the slide show using the selected image information and the music song audio information are displayed.

When running a slide show, as has been described above, the customer 2 selects the thumbnail data 13a of the images to be displayed in the slide show (step S106). However, the images actually displayed in the computer terminal 2a during the slide show will be the screen data that has been generated from the same original image data as that of the thumbnail data 13a.

Next, the customer 2 makes various settings for the slide show. For example, the customer 2 can operate in the slide show settings area 15a and set the interval of displaying the different thumbnail data 13a (the slide interval) or the image information change over effect (the slide effects) by directly entering them or by selecting them from the pull down menu, or can select whether the image information has to be displayed repeatedly or only once (step S107). Furthermore, the slide show setting items need not be limited to the above configuration but it is also possible to add configurations of setting the modifying parameters for the thumbnail data 13a to be displayed, or of setting the image or text data that has to be displayed along with the thumbnail data 13a.

Next, the customer 2 operates in the music song audio information setting area 15b and selects the method of acquiring the music song audio information to be reproduced during the slide show along with the image information (step S108). This method of acquisition of the music song audio information is executed by the music song information acquisition program that makes the computer terminal 2a function as a section that displays the storage locations of the acquirable music song audio information in a selectable manner, or as a storage section such as a hard disk, or as a section for extracting the music song audio information from the information recording media such as CD-R, etc., or as a section for downloading the music song audio information from the server 8.

In concrete terms, the method of acquiring the music song audio information can be the method in which the acquisition is made using a CD that has recorded in it the music song audio information, or the method of using the music song audio information stored in a storage section such as the hard disk, etc, or the method of using the music song audio information downloaded from the server 8, and, for example, if the "Use BGM of CD" tab is selected in the music song audio information setting area 15b, the music song audio information items contained in the CD will be displayed in the pull down menu, the customer selects the required music song audio information from that list (step S111) and then proceeds to step S112.

On the other hand, in step S108, when acquiring the music song audio information from the server 8 via the network N, the computer terminal 2a will be connected via the Internet to the URL that has been set beforehand by the music song audio information acquisition program or to the URL that is specified by the customer 2 (step S109), and the customer 2 downloads from the server 8 the desired music song audio information ((5) in Fig. 1), makes the storing section of the computer terminal 2a store this information (step S110), and then proceeds to step S112.

Further, the selection of the thumbnail data 13a in step S106, the setting of the slide show in step S107, and setting of the music song audio information in steps S108 to S110 need not necessarily follow this sequence, but these operations can be done in any required sequence. In addition, for example, when it is sufficient to use the conditions for the slide show that have already been set beforehand as the default settings, it is possible to omit the step S107 of setting the slide effects.

If the slide show start switch 15e is pressed after the selection of the image information and music song audio information and the setting of the slide effects has been completed according to the above procedure, the slide show will be started (step S112) using the selected image information and music song audio information. During the slide show, the screen data of the selected image data will be displayed and the selected music song audio will be output from the speakers.

In the slide show editing screen shown in Fig. 5, the slide show saving switch 15d has been provided that stores the entire slide in one comprehensive set containing all its associated data, and the consolidated sweep storing program is started when this switch is pressed. This consolidated sweep storing program is one that makes the computer function as a section for preparing the slide show relationships file and as a section for preparing a folder at the destination of storing and then outputting in one set the image information, the music song audio information, the slide show program and the file of relationships. Furthermore, in addition to the above section, it is also possible that the computer is made to function as a section for resizing the set data and transmit it as an attachment to an e-mail after compressing it.

This relationships file is a file in which are recorded the path names of the image information and music song audio information used at the time of playing back the slide show and the slide show setting information such as the slide display sequence, slide intervals, slide effects, etc., and by preparing the relationships file it is possible to reproduce the slide show with the same settings as those used when the slide show was reproduced once in the computer terminal 2a.

After running the slide show, the selection of whether or not to save the slide show as a set is displayed (step S113), and the menu screen is displayed when the slide show is not to be saved (step S113: NO), or else, when storing the slide show as a set by pressing the slide show save switch 15d (step S113: YES), the consolidated sweep storing program prepares the relationships file and stores it with all the information used during the slide show as a set data (step S114).

Further, in the above step S113, if the destination of saving the set data is specified as another recording medium such as a blank CD-R or DVD-R, it is possible to prepare a reproduction-only information recording medium 5a that is capable of reproducing the slide show with the same conditions as those used when the slide show was reproduced in the computer terminal 2a, and this reproduction-only information recording medium 5a can be given as gifts to other customers 9 such as friends (Fig. 1 (6)). In addition, if the computer terminal 2a and the computer terminal 9a have been connected together via the network N at the time of inserting the information recording medium 5 in the computer terminal 2a, it is also possible to copy automatically in the computer terminal 9a the information contained in the information recording medium 5, and at this time, if a blank information recording medium 10 has been inserted in the computer terminal 9a, it is also possible to copy the information onto this information recording medium 10.

Furthermore, although in the above steps S108 to S110 the example described has been one in which the music song audio information is downloaded from the server 8 via the network N, it is not necessary that the computer terminal 2a be connected to the network N, and this process is not a mandatory one.

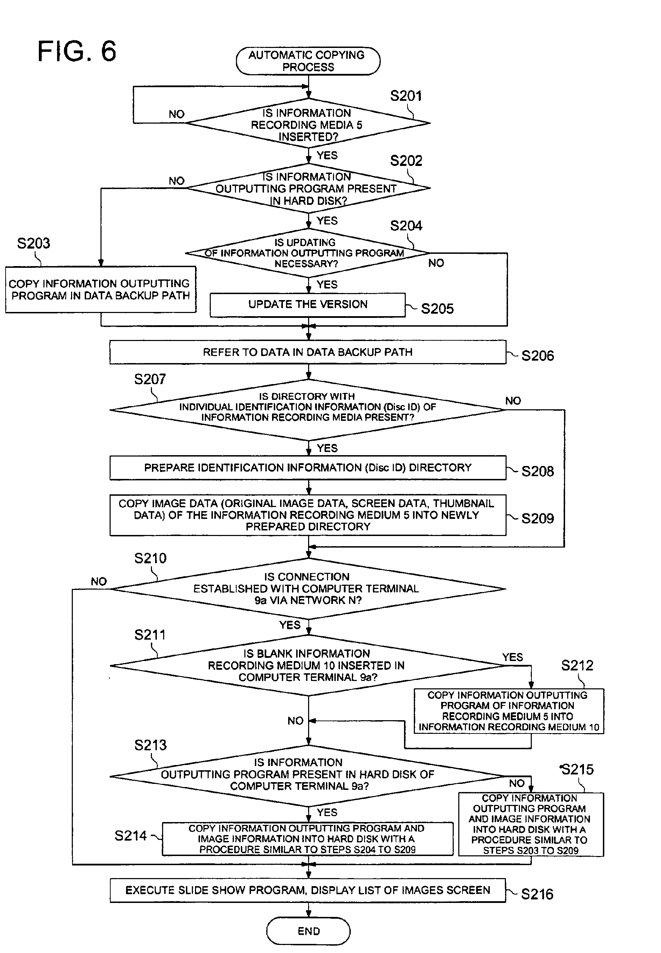

Here, the information copying procedure using the automatic copying program, the data structure of the information recorded in the information recording medium 5, and the data structure of the information that is automatically saved in the computer terminal 2a or in the computer terminal 9a or in the information recording medium 10 that is inserted in the computer terminal 9a are explained referring to Fig. 6 to Fig. 8.

Fig. 6 is a flow chart showing the processing of automatic information copying by the automatic copying program. As is shown in Fig. 6, when the information recording medium 5 is inserted in the computer terminal 2a (step S201: YES), the automatic copying program is started and the control section (not shown in the figure) inside the computer terminal 2a carries out the automatic copying of the information in the information recording medium 5 according to the automatic copying program. First, the control section judges whether or not the information outputting program has been stored in the storage section within the computer terminal 2a (step S202), if the program has already been stored (step S202: YES) the program execution moves on to step S204, and if the program has not been stored (step S202: NO) the information outputting program recorded in the information recording medium 5 is copied into the data backup path of the hard disk which is the storage section (step S203), and then the execution moves on to step S206.

In step S204, the control section compares the version of the information outputting program already stored in the storage section with the version of the same program stored within the information recording medium 5, and judges whether or not updating of the program is necessary (step S204), if updating is necessary (step S204: YES) the information outputting program within the storage section is updated (step S205) and then the execution proceeds to step S206, and if updating is not necessary (step S204: NO) the execution proceeds directly to step S206.

In step S206, the control section references the information within the data backup path of the hard disk. Next, it judges whether or not a directory is present with the same identification information as the identification information (Disc ID) as that recorded in the information recording medium 5 (step S207), and if a directory is present with the same identification information (step S207: YES), the program execution proceeds to step S210. On the other hand, if no directory exists with the same identification information as that recorded in the information recording medium 5 (step S207: NO), a directory with the identification information recorded in the information recording medium 5 is prepared within the data backup path (step S208), and then copies the image information (including the original image data, the screen data, and the thumbnail data) recorded in the information recording medium 5 and then proceeds to step S210.

In step S210, the control section judges whether or not the connection has been made to the computer terminal 9a of the customer 9 via the communication control section and, through it, to the network N, and proceeds to step S216 if the connection has not been made (step S210: NO), and if the connection has been made (step S210: YES), asks the question whether or not a blank information recording medium 10 has been inserted in the computer terminal 9a (step S211). If a blank information recording medium 10 has been inserted in the computer terminal 9a (step S211: YES), the data of the information outputting program in the information recording medium 5 is transmitted via the network N and the communication control section to the computer terminal 9a and is copied onto the information recording medium 10.

On the other hand, if a blank information recording medium 10 has not been inserted (step S211: NO), judgment is made whether or not the information outputting program has been stored in the hard disk of the computer terminal 9a (step S213), and if the information outputting program has already been stored in it (step S213: YES), the information outputting program and the image data will be copied into the hard disk of the computer terminal 9a (step S214) using a procedure similar to that of steps S204 to S209. However, if the information outputting program has not been stored beforehand in the hard disk (step S213: NO), the information outputting program and the image data will be copied into the hard disk of the computer terminal 9a using a procedure similar to that of steps S203 to S209 (step S215).

Next, in step S216, the control section of the computer terminal 2a or of the computer terminal 9a starts the slide show program that is within the information outputting program that has been copied in the computer terminal 2a or the computer terminal 9a, or in the information recording medium inserted in the computer terminal 9a, then displays the menu screen of the slide show program in the display section (step S216), and then the automatic copying operations will be terminated.

Next, the data structure of the information recording medium 5, and the data structure after copying are described, respectively, referring to the figures.

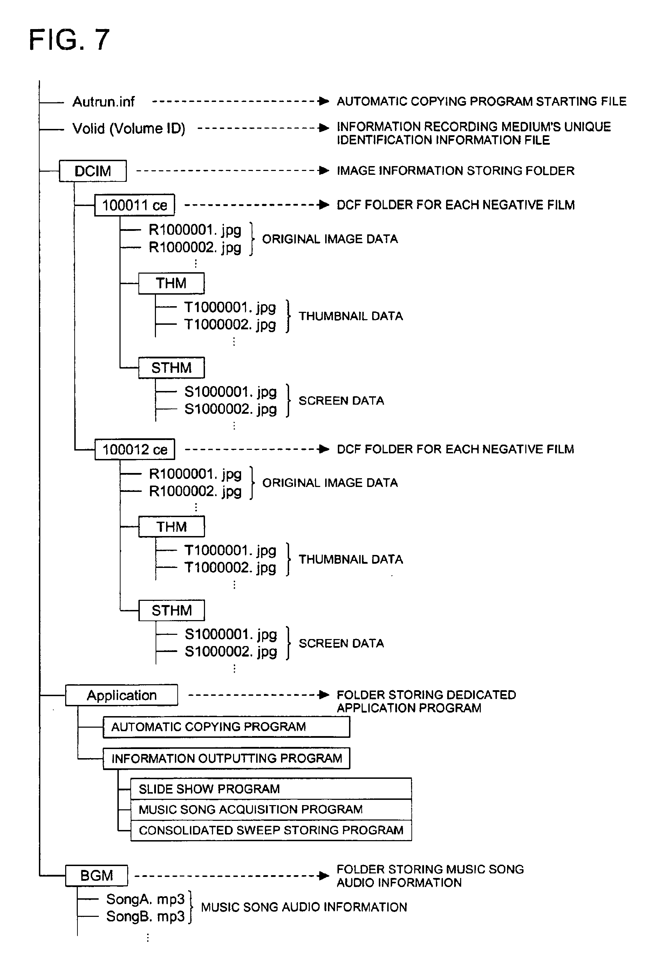

Fig. 7 is a diagram showing the data structure in the information recording medium 5. As is shown in Fig. 7, the automatically executed file (Autrun.inf) that starts the automatic copying program when this medium is inserted into the computer, the text file Volid (Volume ID) storing in it the identification information (Disc ID) that is unique for each information recording medium, the DCIM folder storing the image information, the application program folder, and the BGM folder storing the music song audio information are stored in the information recording medium 5. Further, within the DCIM folder are stored the image information in separate folders for each negative film, the original image data for each negative film, the THM file for storing the thumbnail data, and the STHM file for storing the screen data. For example, corresponding to the original image data R1000001.jpg, the thumbnail data T1000001.jpg is stored in the THM file, and the screen data S1000001.jpg is stored in the STHM file.

The automatic copying program and the information outputting program are stored in the application program folder. The information outputting program contains the slide show program, the music song audio acquisition program, and the consolidated sweep storing program. Also, the BGM folder stores the music song audio information. Further, in the example of data structure shown in Fig. 7, the image data indicating the BGM folder and the BGM folder are stored as required and it is not necessary that they be recorded in the information recording medium 5.

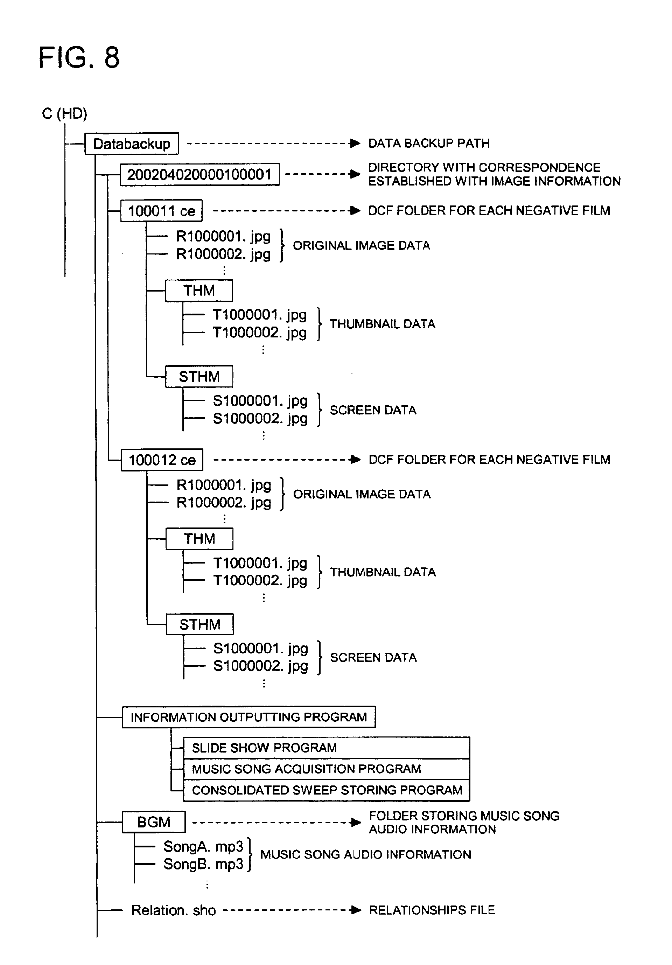

Next, referring to Fig. 8, the data structure after copying by the automatic copying operation is described here. As is shown in Fig. 8, the information outputting program is stored by the automatic copying program in the backup path of the hard disk of the computer terminal 2a or of the computer terminal 9a, or in the blank information recording medium 10 inserted in the computer terminal 9a, and a directory is prepared for the identification information unique to the information recording medium 5 (Disc ID), and in this folder that has been prepared are copied the folders and image information for each negative film. Further, in either the computer terminal 2a or the computer terminal 9a, once the slide show has been run and saved, the consolidated sweep storing program within the information outputting program prepares and stores the relationships file (Relation.sho) that stores the correspondence relationship between the image information and the music song audio information used during the slide show as well as the slide show settings.

The operations are described next.

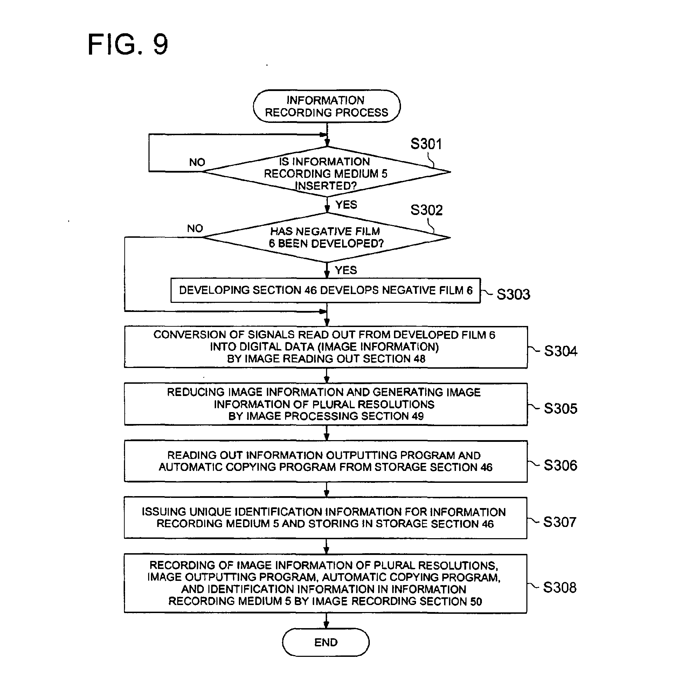

The preliminary assumption while explaining the operations is that the programs for realizing the different operations mentioned in the flow chart of Fig. 9 have been stored in the storage section in a program code format that can be read out by the computer, and the CPU 41 carries out the operations successively in accordance with this program code.

Fig. 9 shows the flow chart of the information recording process that is executed by the CPU 41 of the information recording terminal 40. During the information recording process, the CPU 41 judges whether or not the information recording medium 5 has been inserted (step S301), if it has been inserted (step 301: YES), it judges next if the negative film 6 is one that has already been developed or not (step S302), the operation proceeds to step S304 if the negative film 6 has been developed (step S302: YES), and if the negative film 6 has not yet been developed (step S302: NO), the negative film 6 is developed by the development section 46 thereby preparing the developed film 7 (step S303) after which the operation proceeds to step S304.

In step 304, the CPU 41 obtains the image information (the original image data) by converting to digital data the information read out by the image information reading out section 48 from the developed film 7. Next, the image processing section 49 carries out pixel reduction processing on the original image data thereby preparing the screen data that has a lower resolution than the original image data and is suitable for display in the display device, and also preparing the thumbnail data that has even lower resolution and is used for display in the list of images (step S305).

Next, the CPU 41 reads the information outputting program and the automatic copying program from the storage section 46 (step S306), issues a unique identification information to the information recording medium 5, and stores this identification information in the storage section 46. Next, the image recording section 50 writes the original image data, the screen data, the thumbnail data, and the identification information in the information recording medium 5 (step S308) and ends the information recording process.

As has been described above, during the information recording process the CPU 41 of the information recording terminal 40 records in the information recording medium 5 the image information obtained based on the negative film 6 received from the customer 2, and also the information outputting program and the automatic copying program both of which are stored beforehand in the storage section 46. When the information recording medium 5 is inserted in the computer terminal 2a possessed by the customer 2, the automatic copying program is started automatically, and in addition to copying the information outputting program into the hard disk of the computer terminal 2a, the hard disk of the computer terminal 9a connected to the computer terminal 2a via the network N, and also in the blank information recording medium 10 that has been inserted in the computer terminal 9a, a directory will be prepared corresponding to the identification information recorded inside the information recording medium 5, and then the image information will be stored in this directory. In addition, when the slide show is run in the computer terminal 2a and the computer terminal 9a and the slide show saving switch 15e is pressed, the information of the slide show that has been run is saved in this directory.

As a consequence of this, it becomes possible to carry out unified management of image data in the computer terminal 2a or computer terminal 9a by referring to the identification information of the directory in which the image information is stored, and hence it becomes easy to carry out operations such as searching and selecting image information, slide show editing, etc.

Furthermore, since the image information contains the original image data, the screen data, and the thumbnail data, all of which have different resolutions, it is possible to select the right type of image data to suit the purpose at hand.

In addition, in the above preferred embodiment, although the music song audio information, the image information, and the information outputting program were written into the information recording medium 5 using the writing apparatus 4c at the photo laboratory 4, it is possible, for example, to use an information recording medium 5 in which the music song audio information has already been written beforehand and write only the image information and the information outputting program at the photo laboratory 4.

Furthermore, in the above preferred embodiment, although image information of three types of resolution were recorded in the information recording medium 5, the types of resolution and the number of data are not limited to these, and it is possible, for example, to record only the screen data that is used very frequently and the thumbnail data that is suitable for the display of list of images, and if the resolution of the original image data is not high, it is possible to record only the original image data and the thumbnail data. In addition, it is also possible to record in the information recording medium 5 only the image data and the program that generates the screen data or the thumbnail data from the original image data.

Furthermore, in the above preferred embodiment, appropriate modifications can be made in the detailed configuration of the image and audio recording system and the detailed operations within a range in which the main concept of the present invention is not deviated from.

According to one preferred embodiment of the present invention, it is possible to copy automatically into a computer the image information read out from the photographs recorded in a negative film. Because of this, the labor of complicated copying work is eliminated and it becomes possible to enjoy a slide show, for example, very easily.

According to one preferred embodiment of the present invention, it is possible to save automatically in a specific location of a computer a part of the image information recorded in a recording medium, and for the part that cannot be completely stored automatically, reading out from the information recording medium and storing it as and when it becomes needed, thereby making it possible to limit the memory usage in the computer.

According to one preferred embodiment of the present invention, it is possible to save automatically the image information or the information outputting program not only in any computer but also in another computer that is connected to the first computer via the network N, or in any other recording medium.

According to one preferred embodiment of the present invention, since it is possible to output simultaneously in the computer the image and the music song audio based on the image information and the music song audio information, it is possible to enjoy slide shows easily.

According to one preferred embodiment of the present invention, it is possible to manage in a unified manner the image information and the music song audio information because they are stored in the computer in a state in which they can be identified. As a result of this, it becomes possible to simplify the work of searching for or selecting the image information or music song audio information in a computer and hence it is possible to enjoy slide shows easily.

According to one preferred embodiment of the present invention, since the information of several images having different resolutions are prepared and saved in the computer by processing the information of one image, in the computer, it is possible to select and use according to the application at hand either the original image information or the processed image information. Further, for example, when the resolution of the original image data is high, it is possible to output the image after processing the original image to have a resolution that is appropriate for the display device in the computer, thereby saving the use of memory in the computer.

## Claims

1. A recording medium comprising:
image information;
an information outputting program for outputting a computer images based on the image information, and
an automatic copying program for automatically saving copy information of the image information and the information outputting program in a specific location of the computer.

2. The recording medium of claim 1, wherein the automatic copying program automatically saves a part of the image information and the information outputting program in the computer at the specific location.

3. The recording medium of claim 1, wherein the specific location is either an internal disk of the computer, or an internal disk of another computer that is connected to the computer through a network, or a recording medium in which information can be stored by a recording apparatus that can be connected to the another computer.

4. The recording medium of claim 1, further comprising:
music song audio information;
wherein the information outputting program to display in a selectable manner the storage location for the music song audio information, and to control a computer to function as a simultaneously outputting section to simultaneous outputting images based on the image information and music song audio based on selected the music song audio information,
wherein the automatic copying program to control a computer to function as a saving section to automatically save copy information of the image information, selected the music song audio information, and the information outputting program, in the specific location of the computer.

5. The recording medium of claim 1, further comprising:
unique identification information;
wherein the automatic copying program to control a computer to function as a saving section to automatically save copy information of the information outputting program in the specific location of the computer, acquires information storage area at the specific location corresponding to the identification information, and automatically saves in the information storage area the copy information of the image information.

6. A recording medium comprising:
image information;
an information outputting program that outputs to the computer images based on the image information, and
an automatic copying program that automatically saves in a specific location of the computer the image information and the information outputting program, are stored in the recording medium;
wherein the image information includes plural processed image information having different resolutions.

7. A recording medium of claim 6, wherein the plural processed image information is at least screen data for display in a display device.

8. A program to control a computer to function as automatically saving section that to save at a specific location of the computer the copy information of the image information and the information outputting program that outputs images based on the image information.
